# EUROPEAN PATENT APPLICATION

(11) **EP 4 151 670 A1**
(43) Date of publication of application: **22.03.2023**
(21) Application number: 21197125.4
(22) Date of filing: 16.09.2021
(51) Int. Cl.: C08G 69/08, C08G 69/14, C08G 69/16

(54) **POLYAMIDE 12 AND COPOLYMERS**

(71) Applicant: Evonik Operations GmbH, 45128 Essen (DE)
(72) Inventor: HERMES, Florian, 45721 Haltern am See (DE); HÜLSMANN, Klaus, 45721 Haltern am See (DE); SALWICZEK, Kathrin, 45665 Recklinghausen (DE); RICHTER, Alexander, 45721 Haltern am See (DE)
(74) Representative: Evonik Patent Association

(57) **Abstract**

The invention is a polyamide derived from at least one monomer selected from laurolactam, 1,12-aminolauric acid or their mixture each containing at least one renewable carbon on a mass balance basis, a method of preparing and its use.

## Description

The present invention is directed to polyamides containing at least a renewable carbon on a mass balance basis, a method for producing the same and its use.

Polymers like Polyamides are produced from crude oil. However, there is a demand to provide Polymers based on recycled or sustainable materials. One approach is the mass balance principle.

The mass-balance principle is similar to when purchasing "green" or "clean" electricity. Although there is not exclusive connection for electricity between homes and the renewable source, the quantity of electricity sold and bought sustainably is accounted for. Thereby the the overall share of green energy in the grid rises in step with demand.

In the chemical industry, renewable or recycled feedstock is added at the beginning of the production process and allocated to the end product. This calculation-based principle offers multiple advantages: It reduces greenhouse gas emissions and fossil feedstock inputs, while the quality and properties of a product remain the same. As a result, the products can be processed exactly like conventionally produced materials. There is therefore no need to adapt formulations, plants or processes. And customers who buy mass-balanced products can use them as they would traditional products, while benefiting from the same level of quality.

Independent bodies audit the allocation (i.e., how the volumes of the sustainable raw material are mathematically assigned to the final product). However, at the moment, experts are still using different methods - also known as standards - for auditing and certification. Established certification systems are for example RedCert2 as offered by REDcert GmbH or ISCC Plus offered by ISCC Systems GmbH. In addition, Ellen MacArthur Foundation has formulated a white paper defining guidelines for the uses of mass balanced raw materials in the chemical industry.

In mass-balance production a fraction of the fossil raw material is replaced by a raw material based on a sustainable feedstock such as pyrolysis oil from plastic waste or biomethane generated from animal slurry.

The mass balance method and the use of renewable raw materials should make it possible to save fossil raw materials and reduce greenhouse gas emissions. Depending on the application conditions, manufacturers can replace fossil raw materials with up to 100% biomass. Existing plants and technologies along the value chain remain in use, and customers do not have to change their product formulations. According to this process, the manufacturer produces the basic products according to a recipe in existing plants, but with the biomass as a raw material. The product quality remains unchanged.

Cradle to gate life cycle analysis of chemical raw materials can be performed according to DIN EN ISO 14040 and 14044. Next to the carbon footprint a number of impact categories can be analyzed. One especially important category is the usage of water, for example for the production of polymers.

When producing classical biobased polyamides such as PA1010 or PA11 castor oil is used as a feedstock. Growth of castor beans requires significant resources of water. When producing polymers based on a sustainable carbon from waste-based materials, the water usage is much less. As waste based materials are secondary materials, most of the resource use is allocated to the production of the primary material such as maize or meat production. Secondary biobased material sources are for example defined by the requirements set in the Renewable Energy Directive 2018/2001/EU.

Using secondary plastics as feedstock material can be even more advantageous in terms of life cycle analysis. The requirement of water for that kind of process is typically much lower than for the production of primary biobased raw materials.

The present invention therefore has the object of providing polyamides that meet these requirements, both in terms of mechanical properties, chemical resistance or resistance to aging, and in terms of ecology and biology. In addition, the polyamides should be obtained by methods with low water consumption.

The object is solved by a polyamide derived from at least one monomer selected from laurolactam, 1,12-aminolauric acid or their mixture each containing at least one renewable carbon on a mass balance basis. Thus, the polyamide of the invention covers polyamide 12 and copolyamides derived from laurolactam or 1,12-aminolauric acid. Suitable copolyamides are for example polyamide 1012, 1212 or 12/1012. In addition, copolymers cover block copolymers containing polyethers such as polytetrahydrofurane.

In a preferred embodiment, the monomers of the inventive polyamide are derived at least partially from renewable raw materials, preferably totally from renewable materials. In one aspect of the invention the polyamide may contain at least 20 wt.% are renewable carbons, based on the weight of the polyamide. Preferably, at least 40 wt.% are renewable carbons, more preferably at least 60 wt.% and even more preferably at least 80 wt.%.

In one aspect of the invention the monomers of the polyamide are derived from raw material obtained by pyrolysis selected from biomass wood, waste tires, plastic wastes, industry wastes, household waste, tall-oil, animal fat, or oils. In in alternative embodiment the monomers of the polyamide are derived from raw material obtained on purpose production of butadiene using Ethanol from renewable resources.

The melting point of the polyamides in accordance with ISO 11357 is preferably from 170 °C to 210 °C.

In another aspect of the invention the water uptake of the polyamides in accordance with ISO 62 preferably is 1 wt.% to 2 wt.%, based on the weight of the polyamide.

The content of biobased carbon can be calculated according to ASTM D6866-21. Herein percent Modern Carbon (pMC) is defined. 102 pMC means according to the current definition that 100% biobased carbon is present. The lack of measureable ¹⁴C indicates a fossil carbon source. Therefore, the pMC between 0 and 100 can be used to calculate the fraction of biobased materials. Products according to the present invention contain preferably not more than 50 pMC, more preferably less than 20 pMC, very preferably less than 5 pMC and particularly less than 1 pMC.

The ¹⁴C/¹²C isotope ratio of the polyamide should be less than 1.5.10⁻¹⁰.

A further subject of the invention is a method of producing inventive polyamides wherein the monomers selected from laurolactam, 1,12-aminolauric acid or their mixture each containing at least one renewable carbon on a mass balance basis is polymerized. The conditions of the methods are known in the art. It is preferred to use raw material obtained by pyrolysis selected from biomass wood, waste tires, plastic wastes, industry wastes, household waste, tall-oil, animal fat, or oils. In an alternative embodiment the polyamide is derived from raw material obtained on purpose production of butadiene using Ethanol from renewable resources.

A further subject of the invention is the use of the polyamides of the invention in automotive, sports, 3D printing, clothing.

## Claims

1. A polyamide derived from at least one monomer selected from laurolactam, 1,12-aminolauric acid or their mixture each containing at least one renewable carbon on a mass balance basis.

2. Polyamide according to claim 1 wherein the monomer is derived at least partially from renewable raw materials.

3. Polyamide according to one of the preceding claims wherein the monomer is derived totally from renewable materials.

4. Polyamide according to one of the preceding claims wherein the monomers derived from raw material obtained by pyrolysis selected from biomass wood, waste tires, plastic wastes, industry wastes, household waste, tall-oil, animal fat, or oils.

5. Polyamide according to one of the claims 1 to 4 wherein the monomers derived from raw material obtained on purpose production of butadiene using Ethanol from renewable resources.

6. Polyamide according to one of the preceding claims wherein the melting point in accordance with ISO 11357 is from 170 °C to 210 °C.

7. Polyamide according to one of the preceding claims wherein the water uptake in accordance with ISO 62 is 1 wt.% to 2 wt.%, based on the weight of the polyamide.

8. Polyamide according to one of the preceding claims wherein at least 20 wt.% are renewable carbons, based on the weight of the polyamide.

9. Polyamide according to one of the preceding claims wherein the content of biobased carbon in accordance with ASTM D6866-21 is not more than 50 percent Modern Carbon (pMC).

10. Polyamide according to one of the preceding claims wherein the ¹⁴C/¹²C isotope ratio is less than 1.5.10⁻¹⁰.

11. Method of preparing polyamides according to one of the preceding claims wherein the monomers selected from laurolactam, 1,12-aminolauric acid or their mixture containing at least one renewable carbon on a mass balance basis is polymerized.

12. Method according to claim 11, wherein the monomers are from raw material obtained by pyrolysis selected from biomass wood, waste tires, plastic wastes, industry wastes, household waste, tall-oil, animal fat, or oils.

13. Method according to claim 11, wherein the monomers are derived from raw material obtained on purpose production of butadiene using Ethanol from renewable resources.

14. Use of polyamides according to claim 1 to 10 in automotive, sports, 3D printing, clothing.
